**Europäisches Patentamt**

**European Patent Office**

**Office européen des brevets**

(19)

(11) **EP 1 712 377 A1**

(12) **EUROPEAN PATENT APPLICATION**
published in accordance with Art. 158(3) EPC

(43) Date of publication:
**18.10.2006 Bulletin 2006/42**

(51) Int Cl.:
**B60C 11/00** (2006.01)     **B60C 11/04** (2006.01)

(21) Application number: **04807271.4**

(22) Date of filing: **17.12.2004**

(86) International application number:
**PCT/JP2004/018913**

(87) International publication number:
**WO 2005/068225 (28.07.2005 Gazette 2005/30)**

(84) Designated Contracting States:
**DE ES FR GB IT**

(30) Priority: **16.01.2004 JP 2004008849**

(71) Applicant: **Bridgestone Corporation**
**Tokyo 104-8340 (JP)**

(72) Inventor: **FUJITA, Kazuto,**
**c/o BRIDGESTONE CORPORATION**
**Kodaira-shi,**
**Tokyo 1878531 (JP)**

(74) Representative: **Whalley, Kevin**
**Marks & Clerk**
**90 Long Acre**
**London WC2E 9RA (GB)**

(54) **PNEUMATIC TIRE**

(57)     There is provided a method of tire manufacturing a tire in which preset-beads each preformed by mounting a bead filler on a bead core are disposed radially outward of a carcass band and both side portions of the carcass band are turned around the preset beads to build the tire. The method eliminates a need to hold the considerable intermediate stocks and does not deteriorate the tire uniformity due to the unevenness of the preset bead in the circumference direction. There are also provided an apparatus of forming a preset bead used therefor and a system of forming a preset bead. In the method of manufacturing a tire in which preset-beads each preformed by mounting a bead filler on a bead core are disposed radially outward of a carcass band and both side portions of the carcass band are turned around the preset beads to build the tire, the preset bead is formed by winding and laminating a ribbon-shaped filler rubber 5 radially outward of the bead core 10 over several laps.

*FIG. 1*

EP 1 712 377 A1

**Description**

TECHNICAL FIELD

The present invention relates to a pneumatic tire with an asymmetric tread pattern, in which a plural of circumferential grooves extending substantially along the tire equatorial plane are provided on a tread portion, a mounting orientation on a vehicle is assigned with respect to the inside and outside of the vehicle and, in a state where the tire is fitted on a specified rim and the defined air pressure is filled in the tire and mass corresponding to the maximum load capacity is applied to the tire, an effective ground contact area of the tread half region located outside of the vehicle is larger than an effective ground contact area of the tread half region located inside of the vehicle, with the tread half regions being given by virtually dividing the tread portion at the tire equatorial plane into two. The present invention is aimed to suppress the conicity of the tire to realize both of driveability on a dry road and drainability on a wet road at a high level.

RELATED ART

In order to improve the driveability of a pneumatic tire during high speed running, it is effective to make the profile of the tire lower and to increase the strengths of a tread portion and a belt portion in the tread portion. Meanwhile, in order to improve the driveability during cornering, it is effective to lower a negative ratio of the tire to increase the effective ground contact area, since the ground contact pressure applied to the tread portion becomes larger in the tire disposed in the outer side of the corner, especially in the tread half region located in the outer side of such a tire due to the vehicle driven under a load. However, it may be a problem that the tire with a low negative ratio has poor drainability on a wet road.

Thus, a tire with an asymmetric tread pattern has been used (see, for example, New products highlight, Tire monthly, 2001.3). In this tire, assuming the tread portion is virtually divided at the equatorial plane into two tread half regions, the effective ground contact area of the tread half region which is located at the outer side of the vehicle and which bears a larger ground contact pressure is relatively increased to improve the driveability during cornering, while the negative ratio of the tread half region which is located at the inner side of the vehicle and which less contributes to the driveability is relatively increased to improve the drainability .

JP-10-217719-A discloses a tire with an asymmetric tread pattern comprising a circumferential groove in a tread half region in the outer side of the vehicle and two circumferential grooves in a tread half region in the inner side of the vehicle, wherein a number of oblique grooves are disposed between the circumferential grooves and between the circumferential groove and the tread end, and extending angles of the oblique grooves with respect to the circumferential direction of the tire are optimized to improve wet performance and suppress uneven wear resistance and tire noise.

However, these tires with asymmetric pattern have a problem that a so-called conicity, which is one component of the uniformity of the tire and acts in the width direction of the tire, becomes extremely large to adversely affect the straight-line performance of the vehicle.

DISCLOSURE OF THE INVENTION

The object of the invention is, therefore, to provide a tire which can realize both of driveability on a dry road and drainability on a wet road at a high level while suppressing a conicity with optimizing an effective ground contact area of the both tread half regions and positions of both of the tread ends in the circumferential direction of the tire.

To achieve the above-mentioned objection, the present invention provides a pneumatic tire having a plural of circumferential grooves extending along the equatorial plane of the tire on a tread portion and an asymmetric tread pattern formed on both of tread half regions which are virtually defined by dividing the tread portion at the equatorial plane of the tire into two, wherein, in a state where the tire is fitted on a specified rim and the tire/rim assembly is mounted on the vehicle with the defined air pressure and mass corresponding to the maximum load capacity being applied to it, an effective ground contact area $S_{out}$ of a tread half region located outside of the vehicle is larger than a effective ground contact area $S_{in}$ of a tread half region located inside of the vehicle and a distance $H_{out}$ measured along the radial direction of the tire from a tread end located outside of the vehicle to a point at which the outer surface of the tread portion intersects with the equatorial plane of the tire is smaller than a distance $H_{in}$ measured along the radial direction of the tire from a tread end located inside of the vehicle to the point at which the outer surface of the tread portion intersects with the equatorial plane of the tire.

As used herein, the terms "specified rim", "maximum load capacity" and "defined air pressure" refer to the specified rim, maximum load capacity and air pressure corresponding to the maximum load capacity, respectively, defined in an industrial specification, standard or the like such as JATMA, TRA and ETRTO which is effective in the area where the tire is manufactured, sold or used. Moreover, the term "tread end" refers to an end portion of the tread surface contacting the ground in the condition of measuring the static loaded radius defined in JATMA, i.e. the condition where the tire is fitted on a specified rim and the air pressure of 180 kPa (relative pressure) is applied and the mass corresponding to 88% of the maximum load capacity is loaded. Furthermore, the term "effective ground contact area" refers to the land area in the ground contact region of the tread portion.

Preferably, the effective ground contact area $S_{out}$ and $S_{in}$ and the radial distance $H_{out}$ and $H_{in}$ satisfy the following expression (2):

$$S_{out}/S_{in} = A*H_{out}/H_{in} \quad (1.1<A< 2.1) \qquad (2)$$

In the cross section in the width direction of the tire, the curvature radius of the tread half region located outside of the vehicle is preferably within the range from 110 to 500% of the curvature radius of the tread half region located inside of the vehicle.

The $H_{out}$ is preferably within the range from 2 to 20 mm.

The $H_{in}$ is preferably within the range from 3 to 30 mm.

The $H_{out}$ is preferably within the range from 1.5 to 15% of the grounding width of the tread portion contacting the ground, and the $H_{in}$ is preferably within the range from 2 to 20% of the width of the tread portion contacting the ground.

Preferably, the tread portion further comprises a plural of oblique grooves obliquely extending with respect to the equatorial plane of the tire.

BRIEF DESCRIPTION OF THE DRAWINGS

[FIG. 1] FIG. 1 is a cross sectional view of a principal part of a representative pneumatic tire according to the present invention in the width direction of the tire.
[FIG. 2] FIG. 2 is a partial development view of the tread portion of the tire shown in FIG. 1.
[FIG. 3] FIG. 3 is a partial development view of a tread portion of another tire according to the present invention.
[FIG. 4] FIG. 4 is a partial development view of a tread portion of another tire according to the present invention.
[FIG. 5] FIG. 5 is a partial development view of a tread portion of the tire of the conventional example.

BEST MODE FOR CARRYING OUT THE INVENTION

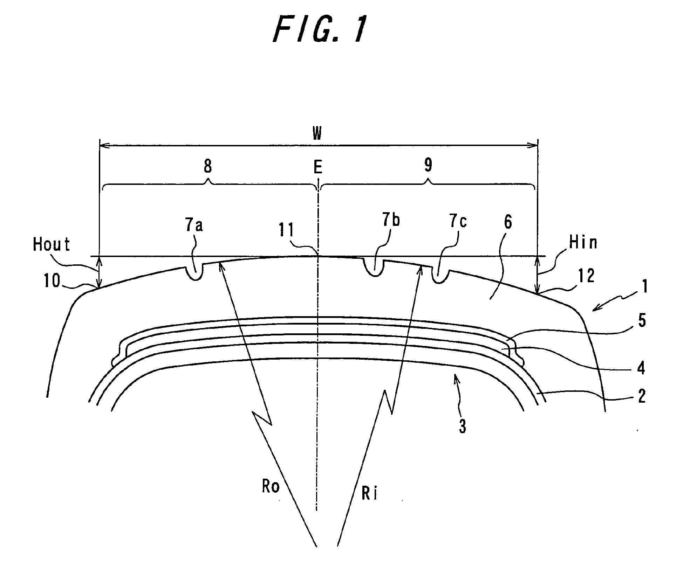

With reference to the drawings, representative embodiments of the present invention will be described below. FIG. 1 is a cross sectional view of a principal part of a representative pneumatic tire (hereinafter referred to as the "tire") according to the present invention in the width direction of the tire.

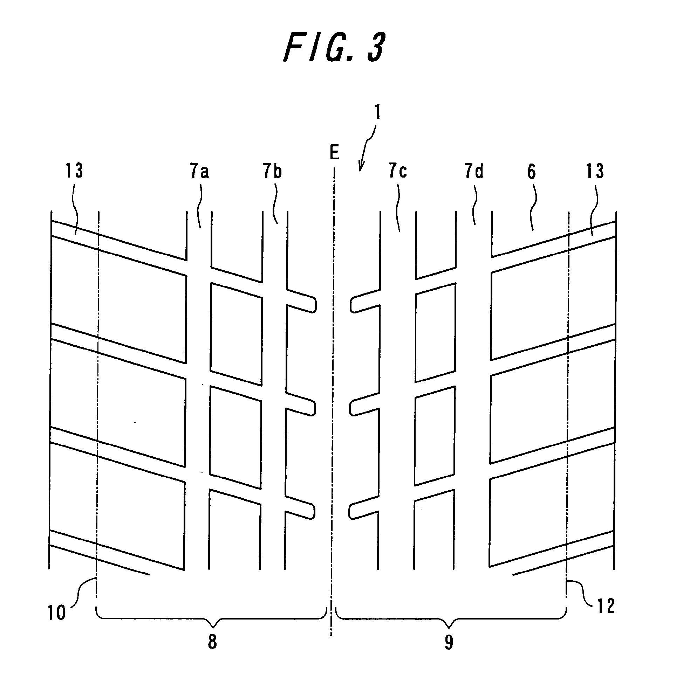

The tire 1 shown in FIG.1 has a pair of bead portion (not shown) and a carcass 2 toroidally extending between the bead portions, and is provided on the outer circumference of the crown portion 3 of the carcass 2 with a belt layer 4 a belt-reinforcing layer 5 and a tread portion 6 arranged in this order. On a tread portion 6 of the tire 1, there are provided a plural of circumferential grooves extending along the equatorial plane E of the tire, e.g. three circumferential grooves 7a, 7b, 7c in FIG. 3, thereby forming an asymmetric tread pattern on tread half regions 8, 9 which are defined by dividing the tread portion 6 into two at the equatorial plane E. In the illustrated embodiment, the belt layer 4 is composed of a singly layer, but two or more layers may be used to form belt layer 4. In addition, the belt-reinforcing layer 5 is composed of a single wide layer covering the entire surface of the belt layer 4 in the illustrated embodiment, but two narrow layers covering only end portions of the belt layer 4 may be used, or these wide layers and narrow layers may be combined.

A major feature of the present invention in its configuration is that in a state where the tire 1 is fitted on a specified rim and the defined air pressure is filled in the tire and mass corresponding to the maximum load capacity is applied to the tire (in FIG. 1, the tire 1 is mounted so as the right-hand side of the tire to be located inside of the vehicle), an effective ground contact area $S_{out}$ of the tread half region located outside of the vehicle (in FIG. 1, the tread half region 8 in the left-hand side) is larger than an effective ground contact area $S_{in}$ of the tread half region located inside of the vehicle (in FIG.1, the tread half region 9 in the right-hand side), and a distance $H_{out}$ measured along the radial direction of the tire from a tread end 10 located outside of the vehicle to a point 11 at which the outer surface of the tread portion intersects with the equatorial plane E of the tire is smaller than a distance $H_{in}$ measured along the radial direction of the tire from a tread end 12 located inside of the vehicle to the point 11 at which the outer surface of the tread portion intersects with the equatorial plane of the tire.

In the next, it will be discussed, along with its operation, how the present invention has adopted the above-mentioned construction.

A tire with an asymmetric tread pattern in which the tread portion of the tire is virtually divided at the tire equatorial plane into two tread half regions and the effective ground contact areas of these tread half regions of are different from each other enhances the driveability by increasing the effective ground contact area of the tread half region located outside of the vehicle to which larger load is applied, while enhancing the drainability by increasing the effective ground contact area of the tread half region located inside of the vehicle which less contributes to the driveability. In this way, the tire having such an asymmetric tread pattern simultaneously satisfies the two performances which have been considered in a trade-off relation, but it also possesses a problem that a larger conicity may arise to adversely affect the straight-line performance.

The present inventor has repeatedly studied the cause of the conicity and found that a ground contact pressure from the road surface is large in the tread half region with a larger effective ground contact area and small in the tread half region with a smaller effective ground contact area, so that the shear forces in the width direction of the tire acting between the tire and the road surface differ between the regions, resulting the difference in the shear forces between the tread half region to be the cause of the conicity. The inventor has further studied the shear forces in the width direction and found that the shear force increases from the equatorial plane of the tire to the outside of the tire width direction and becomes maximum at the tread end, and that the larger the tread falling length which is defined as the distance in the radial direction of the tire from the tread end to the point at which the outer surface of the tread portion intersects with the equatorial plane, the larger the shear force in the width direction of the tire becomes at the tread end, and that the shear force is highly sensitive to a change the falling length. Then, the inventor came up with an idea that the falling length at the tread end is decreased in the tread half region which has the larger effective ground contact area and therefore the larger shear force in the width direction of the tire so that the shear force in the width direction of the tire is decreased, while the falling length at the tread end is increased in the tread half region which has the smaller effective ground contact area and therefore the smaller shear force in the width direction of the tire so that the shear force in the width direction of the tire is increased, and that the shear forces occurring in the both tread half regions are balanced in the width direction to prevent the conicity from occurring, thereby simultaneously satisfying the driveability on a dry road and the drainability on a wet road at a high level. The present invention has been completed in this way.

Preferably, the effective ground contact areas $S_{out}$, $S_{in}$ and the distances $H_{out}$, $H_{in}$ in the radial direction of the tire satisfy the relation as indicated by the following expression (3).

$$S_{out}/S_{in} = A*H_{out}/H_{in} \quad (1.1 < A < 2.1) \quad (3)$$

This is because the difference in the shear forces in the width direction of the tire at the tread ends 10, 12 in the tread half regions 8, 9, respectively, is larger than the difference in the shear force in the width direction of the tire caused by the difference in the ground contact pressure from the road surface when A is 1.1 or less so that a conicity may occur in the direction opposed to those seen in the tire having the conventional asymmetric tread pattern, and because the difference in the shear forces in the width direction of the tire at the tread ends 10, 12 in the tread half regions 8, 9, respectively, cannot cancel the difference in the shear force in the width direction of the tire caused by the difference in the ground contact pressure from the road surface when A is 2.1 or more so that the conicity may not be effectively suppressed.

Further, in the cross section in the width direction of the tire, the curvature radius Ro of the tread half region 8 located outside of the vehicle is preferably within the range from 110 to 150% of the curvature radius Ri of the tread half region 9 located inside of the vehicle. When the curvature radius Ro is less than 110% of the curvature radius Ri, the difference in the shear force in the width direction of the tire at the tread ends 10, 12 of the both tread half region 8, 9, respectively, is larger than the difference in the shear force in the width direction of the tire caused by the difference in the ground contact pressure from the road surface so that a conicity may occur in the direction opposed to those seen in the tire having the conventional asymmetric tread pattern. When the difference is more than 500%, the difference in the shear forces in the width direction of the tire at the tread ends 10, 12 in the tread half regions 8, 9, respectively, cannot cancel the difference in the shear force in the width direction of the tire caused by the difference in the ground contact pressure from the road surface.

Furthermore, the falling length $H_{out}$ of the tread half region located outside of the vehicle is preferably within the range from 2 to 20 mm. When the falling length $H_{out}$ is less than 2mm, the contact pressure from the road surface concentrates at the tread end 10 so that a local wear may occur at this tread end 10. When the falling length $H_{out}$ is more than 20mm, the shear force in the width direction of the tire becomes excessively large so that it may be difficult to balance the shear force in the width direction in the both tread half regions even if the falling length $H_{in}$ of the tread half region 9 located inside of the vehicle.

In addition, the falling length $H_{in}$ of the tread half region located inside of the vehicle is preferably within the range from 3 to 30mm. When the falling length $H_{in}$ is less than 3mm, the difference in the shear forces in the width direction of the tire at the tread ends 10, 12 in the tread half regions 8, 9, respectively, cannot cancel the difference in the shear force in the width direction of the tire caused by the difference in the ground contact pressure from the road surface so that the conicity may not be effectively suppressed. When the falling length $H_{in}$ is more than 30mm, the tread end 12 cannot contact the ground.

Moreover, the falling length $H_{out}$ of the tread half region 8 located outside of the vehicle is preferably within the range from 1.5 to 15% of the width W of the tread portion contacting the ground, and the $H_{in}$ is preferably within the range from 2 to 20% of the width W of the tread portion contacting the ground. When the falling length $H_{out}$ is less than 1.5% of the tread grounding width W, the contact pressure from the road surface concentrates at the tread end 10 so that a local wear may occur at this tread end 10. When the falling length $H_{out}$ is more than 15% of the tread grounding width W, the shear force in the width direction of the tire becomes excessively large so that it may be difficult to balance the shear force in the width direction in the both tread half regions even if the falling length $H_{in}$ of the tread half region 9 located inside of the vehicle. When the falling length $H_{in}$ is less than 2% of the tread grounding width W, the difference in the shear forces in the width direction of the tire at the tread ends 10, 12 in the tread half regions 8, 9, respectively, cannot cancel the difference in the shear force in the width direction of the tire caused by the difference in the ground contact pressure from the road surface so that the conicity may not be effectively suppressed. When the falling length $H_{in}$ is more than 20% of the tread grounding width W, the tread end 12 cannot contact the ground.

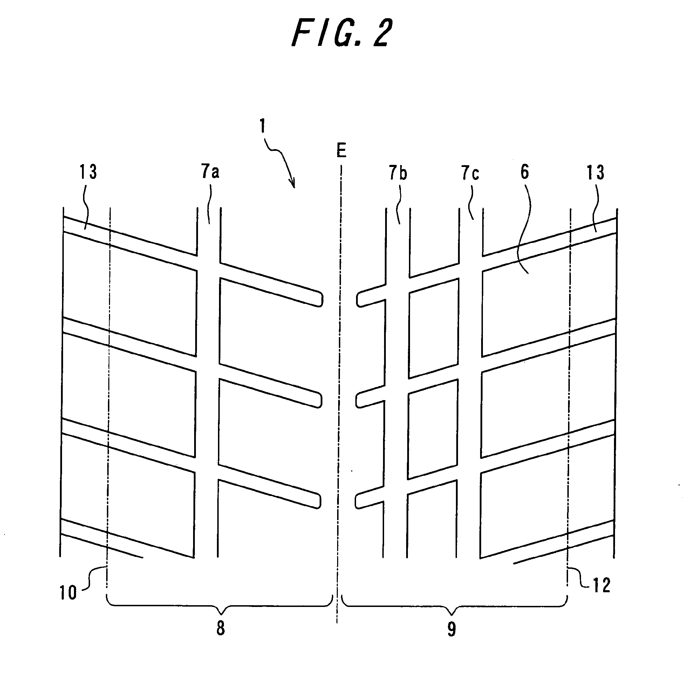

FIG. 2 is a partial development view of the tread portion 2 of the tire shown in FIG. 1. As shown in FIG. 2, the tread portion 5 of the tire 1 preferably comprises a plural of oblique grooves 13 obliquely extending with respect to the equatorial plane E of the tire. With providing such grooves 13, the drainability may be further improved.

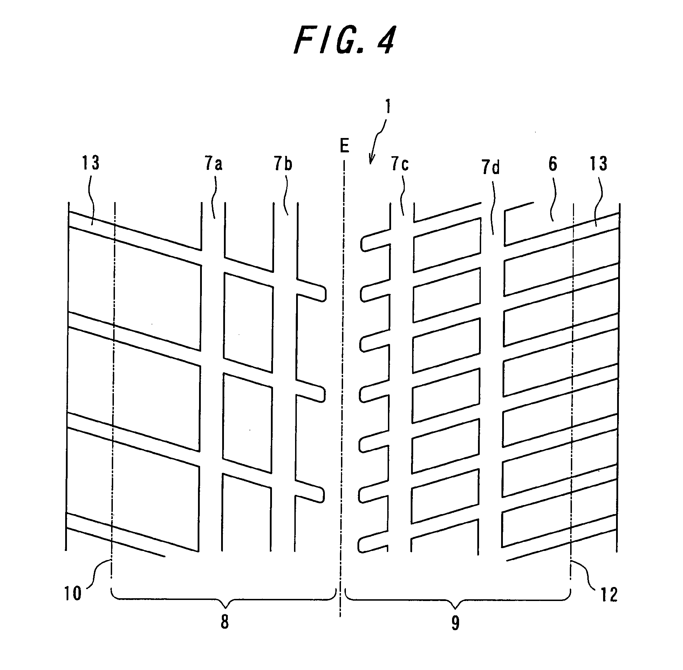

The descriptions above show only a part of the preferred embodiments of the present invention, and various modifications can be made within the scope of the appended claims. For example, in the embodiment shown in FIG. 1, one circumferential groove 7a is arranged in the tread half region 8 and two circumferential grooves 7b, 7c which have the groove width identical to that of the groove 7a are arranged in the tread half region 9, thereby making the effective ground contact areas of the both tread half regions 8, 9 in an appropriate relation. As shown in FIG. 3, the effective ground contact areas may also be made in an appropriate relation by providing the same numbers of circumferential grooves on each of the tread half regions 8, 9, for example, in FIG. 3, two circumferential grooves 7a, 7b on the tread half region 8 and two circumferential grooves 7c, 7d on the tread half region 9, and setting the groove width of the circumferential grooves 7a, 7b smaller than those of the circumferential grooves 7c, 7d. Alternatively, as shown in FIG. 4, the effective ground contact areas may be differentiated between the tread half regions by providing the same numbers of circumferential grooves on each of the tread half regions, for example, in FIG. 3, two circumferential grooves 7a, 7b on the tread half region 8 and two circumferential grooves 7c, 7d on the tread half regions 9, and providing the different numbers of oblique grooves 13 on each of the tread half regions 8, 9. Further, in the embodiment shown in FIG. 1, each of the tread half regions 8, 9 is defined by a single circular arc having its center on the equatorial plane of the tire and having the curvature radius of Ri or Ro. However, each of the tread half regions may be defined by a plural of circular arcs which are mutually inscribed and are connected with each other.

EXAMPLES

Tires according to the present invention were experimentally manufactured and their performances were evaluated. The details will be described below.

A tire of Example 1 was a pneumatic tire for a passenger vehicle with a tire size of 205/65R15 and had the tread pattern as shown in FIG. 2. All of the circumferential grooves had the groove depth of 8 mm and the groove width of 7 mm. The ratio of the effective ground contact area of the tread half region located outside of the vehicle to the effective ground contact area of the tread half region located inside of the vehicle was 1.14. A single circular arc with its center on the equatorial plane of the tire defined the both tread half regions.

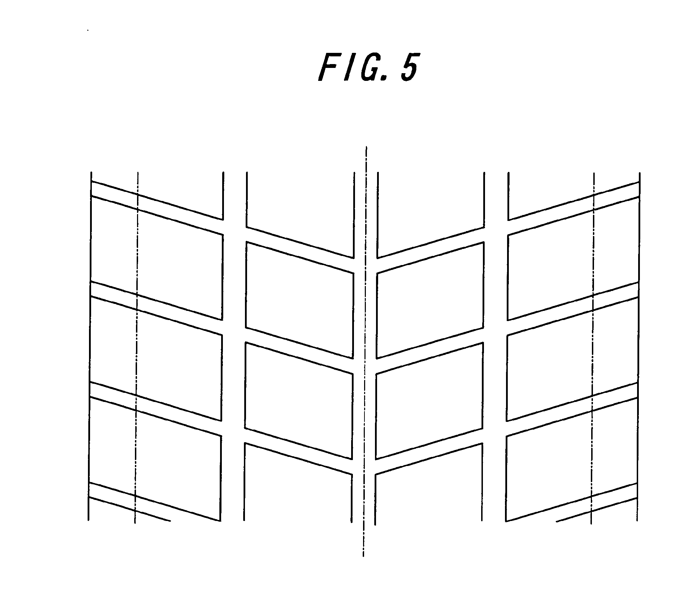

The tire of Example 1 also had the parameters shown in Table 1. For the purpose of comparison, tires of Conventional Example 1 and Comparative Example 1 were also experimentally manufactured. In the tire of Conventional Example 1, the tire size and the numbers, groove depth and the groove width of circumferential grooves were the same as those of the tire of Example 1, each of the tread half regions was defined by a single circular arc with its center on the equatorial plane of the tire, the tread pattern shown in FIG. 5 was provided, and each of the tread half regions had the same effective ground contact area and the same falling length at the tread end. The tire of Conventional Example 1 also had the parameters shown in Table 1. The tire of Comparative Example 1 had the tread pattern shown in 2, the same falling lengths at the both tread ends and the parameters shown in Table 1.

A tire of Example 2 was a pneumatic tire for a passenger vehicle with a tire size of 205/65R15 and had the tread pattern as shown in FIG. 2. All of the circumferential grooves had the groove depth of 8 mm and the groove width of 7 mm. The ratio of the effective ground contact area of the tread half region located outside of the vehicle to the effective ground contact area of the tread half region located inside of the vehicle was 1.14. Two circular arc, one of which is a circular arc with its center on the equatorial plane of the tire and the other of which is a circular arc which inscribed therewith, parallel to the equatorial plane of the tire and had its center on the line apart from the equatorial plane of the tire toward the outside of the width direction of the tire by 34.3 mm, defined the both tread half regions. The tire of Example 1 also had the parameters shown in Table 2. For the purpose of comparison, tires of Conventional Example 2 and Comparative Example 2 were also experimentally manufactured. In the tire of Conventional Example 2, the tire size and the numbers, groove depth and the groove width of circumferential grooves were the same as those of the tire of Example 2. Each of the tread half regions was defined by a first circular arc with its center on the equatorial plane of the tire and a second circular arc which inscribed therewith, parallel to the equatorial plane of the tire, had its center on the line apart from the equatorial plane of the tire toward the outside of the width direction of the tire by 34.3 mm, and had the curvature radius smaller than that of the first circular arc. The tread pattern shown in FIG. 5 was provided, and each of the tread half regions had the same effective ground contact area and the same falling length at the tread end. The tire of Conventional Example 2 also had the parameters shown in Table 2. The tire of Comparative Example 2 had the tread pattern shown in 2, the same falling lengths at the both tread ends and the parameters shown in Table 2.

Each of the above-mentioned test tires was fitted on the standard rim (6JJ) specified by JATMA to form a tire/rim assembly. Then, the tires were inflated with an internal pressure of 240 kPa (relative pressure) and subjected to the following tests.

1. Conicity

Ten sets were prepared for each of the above-mentioned tire/rim assembly. The tire/rim assemblies were made to run on a drum tester under the condition of the tire load mass of 4.4 kN and the running speed of 10 km/h, and side forces caused on these tires were measured. The averages of each ten sets were calculated and used for the evaluation of the conicities.

2. Driveability

Each four sets of the above-mentioned tire/wheel assemblies were installed on a test vehicle. The test vehicle were driven on a test course of a dry road in a various running mode under the condition of the tire load mass corresponding to two passengers on board, and a professional driver sensory evaluated the driveability.

3. Drainability

Each four sets of the above-mentioned tire/wheel assemblies were installed on a test vehicle. The test vehicle were driven on a test course of a wet road with a water depth of 5mm, in a various running mode under the condition of the tire load mass corresponding to two passengers on board, and the critical speeds at generation of the hydroplaning phenomenon were measured. The measured values were used to evaluate the drainability.

The results of the evaluations of the conicity, driveability and drainability were shown in Tables 1 and 2. It should be noted that the smaller values of conicity in Tables 1 and 2 represent a less probability of causing the conicity, and that the values of the driveability and drainability are indicated by index ratio with setting the result of Conventional Example 1 in Table1 or the result of Conventional Example 2 in Table2 as 100. The larger index means the better performance.

Table 1

| | | Conventional Example 1 | Comparative Example 1 | Example 1 |
|---|---|---|---|---|
| Tread grounding width | | 75 mm | 75 mm | 75 mm |
| Tread half region located outside of the tire | Falling length at the tread end | 7 mm | 7 mm | 6.8 mm |
| | Curvature radius | 405 mm | 405 mm | 417 mm |
| Tread half region located inside of the tire | Falling length at the tread end | 7 mm | 7 mm | 7.2 mm |
| | Curvature radius | 405 mm | 405 mm | 394 mm |

(continued)

|  |  | Conventional Example 1 | Comparative Example 1 | Example 1 |
|---|---|---|---|---|
| Result of eveluation | Conicity | 18 N | 86 N | 20 N |
|  | Driveability | 100 | 108 | 105 |
|  | Drainability | 100 | 108 | 108 |

Table 2

|  |  | Conventional Example 2 | Comparative Example 2 Example 2 | Example 2 |
|---|---|---|---|---|
| Tread grounding width | | 76 mm | 76 mm | 76 mm |
| Tread half region located outside of the tire | Falling length at the tread end | 6.9 mm | 6.9 mm | 6.8 mm |
|  | Curvature (1st arc/2nd arc) | 810/160 mm | 810/160 mm | 810/185 mm |
| Tread half region located inside of the tire | Falling length at the tread end | 6.9 mm | 6.9 mm | 7.1 mm |
|  | Curvature radius (1st arc/2nd arc) | 810/160 mm | 810/160 mm | 810/140 mm |
| Result of eveluation | Conicity | 19 N | 88 N | 22 N |
|  | Driveability | 100 | 108 | 106 |
|  | Drainability | 100 | 108 | 108 |

As can be seen from the results in Table 1, the tire of Example 1 can remarkably improve the driveability and drainability while maintaining the conicity at the same lever as compared with the tire of Conventional Example 1, and the tire of Example 1 can remarkably improve the conicity while maintaining the driveability and drainability at the same level as compared with the tire of Comparative Example 1. Accordingly, it is clear that the tire of Example 1 has a superior comprehensive performance. Also, as can be seen from the results in Table 2, the tire of Example 2 can remarkably improve the driveability and drainability while maintaining the conicity at the same lever as compared with the tire of Conventional Example 2, and the tire of Example 2 can remarkably improve the conicity while maintaining the driveability and drainability at the same level as compared with the tire of Comparative Example 2. Accordingly, it is clear that the tire of Example 2 has a superior comprehensive performance.

INDUSTRIAL APPLICABILITY

According to the present invention, it is possible to provide a tire which can realize both of driveability on a dry road and drainability on a wet road at a high level while suppressing a conicity with optimizing an effective ground contact area of the tread portion and a sectional shape of the tread portion in the width direction of the tire.

Claims

1. A pneumatic tire having a plural of circumferential grooves extending along the equatorial plane of the tire on a tread portion and an asymmetric tread pattern formed on both of tread half regions virtually defined by dividing the tread portion at the equatorial plane of the tire, wherein, in a state where the tire is fitted on a specified rim and inflated the tire/rim assembly is mounted on the vehicle with the defined air pressure and mass corresponding to the maximum load capacity being applied to it, an effective ground contact area $S_{out}$ of a tread half region located outside of the vehicle is larger than a effective ground contact area $S_{in}$ of a tread half region located inside of the vehicle and a distance $H_{out}$ measured along the radial direction of the tire from a tread end located outside of the vehicle to a point at which the outer surface of the tread portion intersects with the equatorial plane of the tire is smaller than a distance $H_{in}$ measured along the radial direction of the tire from a tread end located inside of the vehicle to the point at which the outer surface of the tread portion intersects with the equatorial plane of the tire.

2. The tire according to claim 1, wherein the effective ground contact area $S_{out}$ and $S_{in}$ and the radial distance $H_{out}$ and $H_{in}$ satisfy the following expression (1):

$$S_{out}/S_{in} = A*H_{out}/H_{in} \quad (1.1 < A < 2.1) \quad (1)$$

3. The tire according to claim 1 or 2, wherein in the cross section in the width direction of the tire, the curvature radius of the tread half region located outside of the vehicle is within the range from 110 to 500% of the curvature radius of the tread half region located inside of the vehicle.

4. The tire according to any one of claims 1 to 3, wherein the $H_{out}$ is within the range from 2 to 20 mm.

5. The tire according to any one of claims 1 to 3, wherein the $H_{in}$ is within the range from 3 to 30 mm.

6. The tire according to any one of claims 1 to 5, wherein the $H_{out}$ is within the range from 1.5 to 15% of the grounding width of the tread portion contacting the ground, and the $H_{in}$ is within the range from 2 to 20% of the width of the tread portion contacting the ground.

7. The tire according to any one of claims 1 to 6, wherein the tread portion further comprises a plural of oblique grooves obliquely extending with respect to the equatorial plane of the tire.

# FIG. 1

# FIG. 2

# FIG. 3

## FIG. 4

# FIG. 5

**EP 1 712 377 A1**

| | INTERNATIONAL SEARCH REPORT | International application No. |
|---|---|---|
| | | PCT/JP2004/018913 |

A. CLASSIFICATION OF SUBJECT MATTER
Int.Cl⁷ B60C11/00, B60C11/04

According to International Patent Classification (IPC) or to both national classification and IPC

B. FIELDS SEARCHED

Minimum documentation searched (classification system followed by classification symbols)
Int.Cl⁷ B60C11/00-11/24

Documentation searched other than minimum documentation to the extent that such documents are included in the fields searched
Jitsuyo Shinan Koho        1926-1996    Toroku Jitsuyo Shinan Koho    1994-2005
Kokai Jitsuyo Shinan Koho   1971-2005    Jitsuyo Shinan Toroku Koho    1996-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 57-147901 A (The Yokohama Rubber Co., Ltd.),<br>13 September, 1982 (13.09.82),<br>Claims; page 3, lower right column; Fig. 1<br>(Family: none) | 1-7 |
| A | JP 7-164826 A (Bridgestone Corp.),<br>27 June, 1995 (27.06.95),<br>Claims; drawings<br>(Family: none) | 1-7 |
| A | JP 63-159108 A (The Yokohama Rubber Co., Ltd.),<br>02 July, 1988 (02.07.88),<br>Full text<br>(Family: none) | 1-7 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 February, 2005 (15.02.05) | 01 March, 2005 (01.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/018913

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-178713 A (Bridgestone Corp.), 26 June, 2002 (26.06.02), Full text (Family: none) | 1-7 |

Form PCT/ISA/210 (continuation of second sheet) (January 2004)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10217719 A